# EUROPEAN PATENT APPLICATION

(11) **EP 4 489 409 A1**
(43) Date of publication of application: **08.01.2025**
(21) Application number: 23777893.1
(22) Date of filing: 20.03.2023
(51) Int. Cl.: H04N 21/431

(54) **DISPLAY CONTROL METHOD AND APPARATUS, AND ELECTRONIC DEVICE, STORAGE MEDIUM AND PROGRAM PRODUCT**

(30) Priority: 30.03.2022 CN 202210332133
(71) Applicant: Beijing Zitiao Network Technology Co., Ltd., Beijing 100190 (CN)
(72) Inventor: CHANG, Weiyi, Beijing 100086 (CN); LI, Yaping, Beijing 100086 (CN); YANG, Jiahui, Beijing 100086 (CN)
(74) Representative: Dentons UK and Middle East LLP
(86) International application number: PCT/CN2023/082417
(87) International publication number: WO 2023/185519

(57) **Abstract**

Embodiments of the present disclosure relate to a display controlling method and apparatus, an electronic device, a storage medium, and a program product. The method includes: displaying a first control corresponding to a currently displayed first media content in a first preset region of a media content display interface, wherein the first media content includes at least two of second media contents; the first control includes media content identifiers corresponding to the at least two of second media contents; the first control indicates switching of displaying of the at least two of second media contents; and switching at least one of the media content identifiers to a second control in response to a target triggering operation applied in the media content display interface, wherein the second control is configured to slide to adjust a display progress of at least a part of the first media content.

## Description

### CROSS-REFERENCE TO RELATED APPLICATION(S)

The present disclosure claims priority to Chinese Patent Application No. 202210332133.3, filed with the China National Intellectual Property Administration on Wednesday, March 30, 2022, the disclosure of which is incorporated herein by reference in its entirety.

### FIELD

Embodiments of the present disclosure relate to the field of computer technologies, for example, to a display controlling method and apparatus, an electronic device, a storage medium, and a program product.

### BACKGROUND

With the rapid development of Internet technology and terminal technology, functions provided by application programs are increasingly enriched. For example, video applications can provide functions such as playing a set of videos.

### SUMMARY

Embodiments of the present disclosure relate to a display control method and apparatus, an electronic device, a storage medium, and a program product, so as to improve the efficiency of adjusting a playing progress of a video.

In a first aspect, the embodiments of the present disclosure provide a display controlling method, including:
displaying a first control corresponding to a currently displayed first media content in a first preset region of a media content display interface, wherein the first media content includes at least two of second media contents; the first control includes media content identifiers corresponding to the at least two of second media contents; the first control indicates switching of the displaying of the at least two of second media contents;
switching at least one of the media content identifiers to a second control in response to a target triggering operation applied in the media content display interface, wherein the second control is configured to slide to adjust a display progress of at least a part of the first media content.

In a second aspect, the embodiments of the present disclosure provide a display controlling apparatus, including:
a first control display module, configured to display a first control corresponding to a currently displayed first media content in a first preset region of a media content display interface, wherein the first media content includes at least two of second media contents; the first control includes media content identifiers corresponding to the at least two of second media contents; the first control indicates switching of the displaying of the at least two of second media contents; and
a second control display module, configured to switch at least one of the media content identifiers to a second control in response to a target triggering operation applied in the media content display interface, wherein the second control is configured to slide to adjust a display progress of at least a part of the first media content.

In a third aspect, the embodiments of the present disclosure provide an electronic device, including:
one or more processors;
a memory, configured to store one or more programs.

The one or more programs, when executed by the one or more processors, cause the one or more processors to implement the display controlling method as mentioned in the embodiments of the present disclosure.

In a fourth aspect, the embodiments of the present disclosure further provide a computer-readable storage medium, storing a computer program. The program, when executed by a processor, implements the display controlling method according to the embodiments of the present disclosure.

In a fifth aspect, the embodiments of the present disclosure further provide a computer program product. The computer program product, when executed by a computer, causes the computer to implement the display controlling method as mentioned in the embodiments of the present disclosure.

### BRIEF DESCRIPTION OF THE DRAWINGS

The above and other features, advantages, and aspects of the various embodiments of the present disclosure will become more apparent by combining the accompanying drawings and referring to the following specific implementations. Throughout the accompanying drawings, identical or similar reference numerals represent identical or similar elements. It should be understood that the accompanying drawings are illustrative, and components and elements may not necessarily be drawn to scale.
FIG. 1 is a flowchart of a display controlling method according to the embodiments of the present disclosure;
FIG. 2 is a schematic diagram of displaying of a first control according to the embodiments of the present disclosure;
FIG. 3 is a flowchart of a further display controlling method according to the embodiments of the present disclosure;
FIG. 4 is a schematic diagram of displaying of a second control according to the embodiments of the present disclosure;
FIG. 5 is a flowchart of a further display controlling method according to the embodiments of the present disclosure;
FIG. 6 is a schematic diagram of displaying of a further second control according to the embodiments of the present disclosure;
FIG. 7 is a schematic diagram of displaying of a further second control according to the embodiments of the present disclosure;
FIG. 8 is a structural block diagram of a display controlling apparatus according to the embodiments of the present disclosure; and
FIG. 9 is a schematic structural diagram of an electronic device according to the embodiments of the present disclosure.

### DETAILED DESCRIPTION OF EMBODIMENTS

The embodiments of the present disclosure will be described below with reference to the accompanying drawings. Although the accompanying drawings show some embodiments of the present disclosure, it should be understood that the present disclosure can be implemented in various forms, and these embodiments are provided for understanding the present disclosure more thoroughly and completely. It should be understood that the accompanying drawings and embodiments of the present disclosure are only used for illustration.

It should be understood that respective steps recorded in method implementations of the present disclosure can be executed in different orders and/or in parallel. In addition, the method implementations may include additional steps and/or omit the execution of the steps shown.

The term "include" and its variants as used herein mean widespread inclusion, namely, "including but not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that the concepts such as "first" and "second" mentioned in the present disclosure are only used to distinguish different apparatuses, modules, or units.

It should be noted that the modifications of "one" and "plurality" mentioned in the present disclosure are indicative, and those skilled in the art should understand that unless otherwise explicitly stated in the context, they should be understood as "one or more".

The names of messages or information exchanged between a plurality of apparatuses in the implementations of the present disclosure are for illustrative purposes only.

In the related technology, when a video set includes a plurality of sub videos, it cannot meet a demand of a user for quickly adjusting a playing progress of a video.

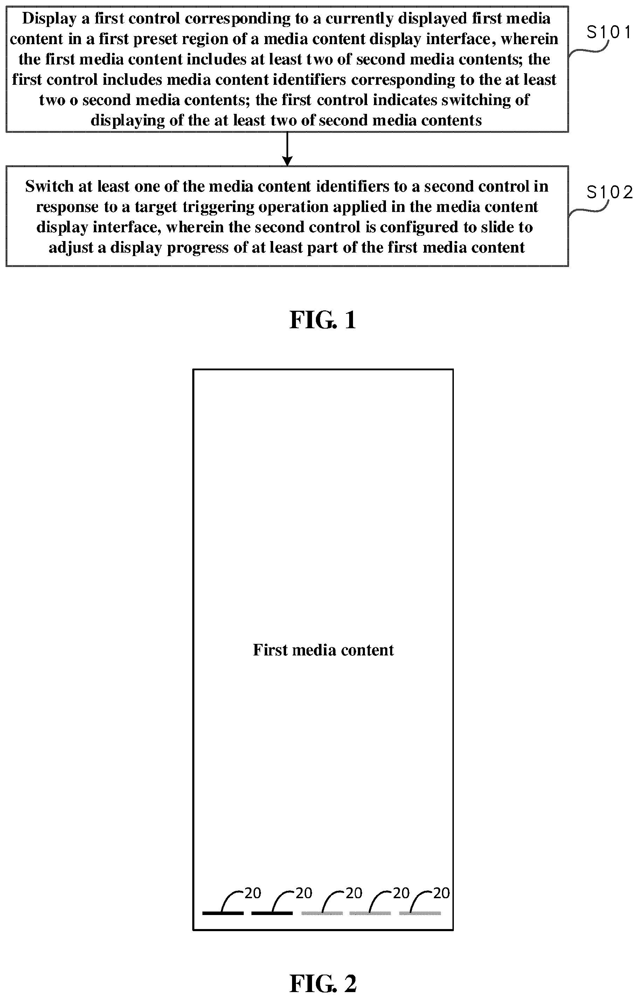

FIG. 1 is a flowchart of a display controlling method according to the embodiments of the present disclosure. The method can be performed by a display controlling apparatus. The apparatus can be implemented by software and/or hardware and can be configured in an electronic device, exemplarily, in a mobile phone or a tablet. The display controlling method provided in the embodiments of the present disclosure is applicable to adjusting a display progress of a media content containing a plurality of media sub-contents. As shown in FIG. 1, the display controlling method provided in this embodiment can include:
S101. A first control corresponding to a currently displayed first media content is displayed in a first preset region of a media content display interface, wherein the first media content includes at least two of second media contents; the first control includes media content identifiers corresponding to the at least two of second media contents; and the first control indicates switching of displaying of the at least two of second media contents.

The media content display interface can be understood as an interface used for displaying a media content. The media content display interface can include the first preset region used for displaying the first control corresponding to the currently displayed first media content. The first media content can be understood as a media content displayed in the media content display interface at current time, and can include at least two of second media contents. The second media contents can be picture contents or video contents, and different second media contents can exist independently in the first media content. It can be understood that the first media content can be a set of a plurality of second media contents. The first control can be a control used for switching displaying of different second media contents in the first media content, and the first control can be provided with media content identifiers respectively corresponding to the at least two of second media contents included in the first media content. Each media content identifier can be a graphical identifier or another identifier, and media content identifiers corresponding to different second media contents have different display styles and/or different display positions located in the first preset region. The first preset region can be understood as a response region of the first control in the media content display interface.

Optionally, when an electronic device displays a first media content including a plurality of segments of second media contents in the media content display interface, the electronic device can display a first control of the first media content in a first preset display region of the media content display interface. For example, media content identifiers 20 respectively corresponding to the plurality of segments of second media contents included in the first media content are displayed at different positions of the first preset display region according to an arrangement sequence of the plurality of segments of second media contents in the first media content, as shown in FIG. 2 (By way of example, the media content identifier 20 is a line segment in the figure). The media content identifiers 20 (for example, the two media content identifiers 20 on the left hand side in the figure) corresponding to the second media contents that have been displayed and the media content identifiers 20 corresponding to the second media contents that are not displayed (for example, the three media content identifiers 20 on the right hand side in the figure) can be displayed in different styles, for example, in different colors and/or transparencies, so as to distinguish the second media contents that have been displayed from the second media contents that are not displayed, or to determine a currently displayed second media content.

S102. At least one of the media content identifiers is switched to a second control in response to a target triggering operation applied in the media content display interface, wherein the second control is configured to slide to adjust a display progress of at least a part of the first media content.

In this embodiment, since the first control can only be configured to switch the displaying of the plurality of segments of second media contents in sequence according to the arrangement sequence of the plurality of segments of second media contents, the first control can be switched to the second control in response to a corresponding triggering operation of a user, and the user quickly adjusts a display progress of at least a part of the first media content using the second control, which can simplify the operation required to adjust the playing progress of the first media content and meet the demand of the user for quickly adjusting the display progress of the first media content.

The target triggering operation can be a triggering operation that switches one or more media content identifiers displayed in the media content display interface to second controls. The target triggering operation can be performed in the media content display interface. Exemplarily, the target triggering operation can be a click operation or a long press operation applied in the media content display interface. Optionally, the target triggering operation is performed in the first preset region, which means that the target triggering operation can be a triggering operation applied on the first control. The second control can be configured to slide to adjust a currently displayed second media content and/or slide to adjust a display progress of the currently displayed second media content.

Optionally, when the user intends to adjust the display progress of the first media content, the user can perform the target triggering operation, for example, making a long press on the first control displayed in the media content display interface. Correspondingly, when receiving the target triggering operation of the user, the electronic device switches one or more media content identifiers displayed in the media content display interface to second controls. Thus, the user can switch the display progress of at least a part of the first media content through a sliding operation applied on the second control, for example, switching the currently displayed second media content and/or switching the display progress of the currently displayed second media content.

In this embodiment, when the one or more media content identifiers displayed in the media content display interface to the second controls, exemplarily, the media content identifier corresponding to the currently displayed second media content can be switched to the second control; the media content identifier on which the target triggering operation is performed can be switched to the second control; the plurality of media content identifiers can be switched to the second controls respectively; the respective media content identifiers can be combined into one second control; or the like.

According to the display controlling method provided in this embodiment, a first control corresponding to a currently displayed first media content is displayed in a first preset region of a media content display interface, wherein the first media content includes at least two of second media contents; the first control includes media content identifiers respectively corresponding to the at least two of second media contents; the first control indicates switching of displaying of the at least two of second media contents; and at least one of the media content identifiers is switched to a second control in response to a target triggering operation applied on the media content broadcast interface, wherein the second control is configured to slide to adjust a display progress of at least a part of the first media content. Exemplarily, at least a part of the first content can be one second media content or a content fragment composed of a plurality of second media contents. In this embodiment, by the adoption of the above method, the media content identifiers in the first control are switched to the second controls, so that the display progress of the first media content is adjusted through the second controls, which can simplify the operation of adjusting the display progress of the first media content and improving the efficiency of adjusting the display progress of the first media content.

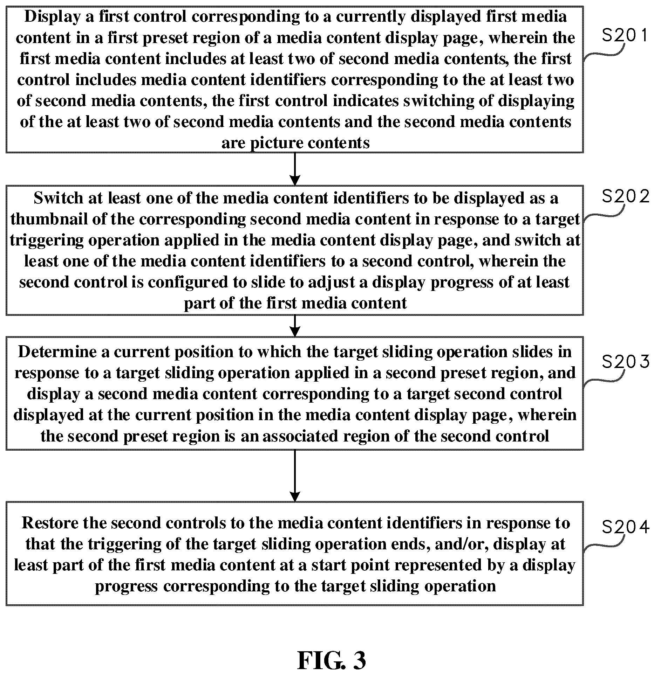

FIG. 3 is a flowchart of another display controlling method according to the embodiments of the present disclosure. The scheme in this embodiment can be combined with one or more optional schemes in the above embodiments. Optionally, the second media contents are picture contents or video contents. At least one of the media content identifiers is switched to a second control, which includes: At least one of the media content identifiers is switched to be displayed as a thumbnail of the corresponding second media content, wherein the media content identifier is a graphical identifier.

Optionally, after at least one of the media content identifiers is switched to a second control, the method further includes: A current position to which the target sliding operation slides is determined in response to a target sliding operation applied in a second preset region, and a second media content corresponding to a target second control displayed at the current position is displayed in the media content display interface, wherein the second preset region is an associated region of the second control.

Optionally, the display control method according to this embodiment further includes: The second control is restored to the media content identifier in response to that the triggering of the target sliding operation ends.

Optionally, the display control method according to this embodiment further includes: At least a part of the first media content is displayed, in response to that the triggering of the target sliding operation ends, at a start point represented by a display progress corresponding to the target sliding operation.

Correspondingly, as shown in FIG. 3, the display controlling method provided in this embodiment can include:
S201. A first control corresponding to a currently displayed first media content is displayed in a first preset region of a media content display interface, wherein the first media content includes at least two of second media contents; the first control includes media content identifiers corresponding to the at least two of second media contents; the first control indicates switching of displaying of the at least two of second media contents; and the second media contents are picture contents or video contents.
S202. At least one of the media content identifiers is switched to be displayed as a thumbnail of the corresponding second media content in response to a target triggering operation applied in the media content display interface, and at least one of the media content identifiers is switched to a second control, wherein the second control is configured to slide to adjust a display progress of at least a part of the first media content.

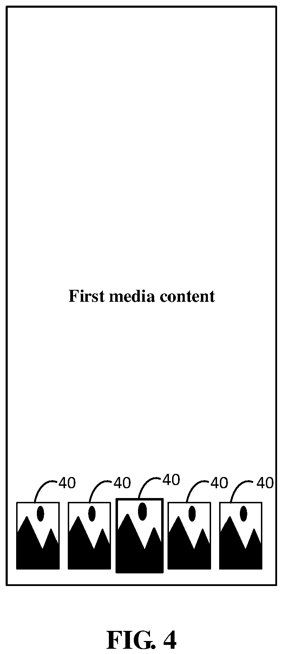

In this embodiment, by way of example, each second media content is a picture content. That is, the first media content includes a plurality of pictures. Furthermore, when the respective pictures in the media content are switched and displayed in sequence, at least one media content identifier 20 (as shown in FIG. 2) displayed in the form of a graphical identifier (for example, a line segment or a point) can be switched to a second control displayed in the form of a thumbnail 40 in response to the target triggering operation. As shown in FIG. 4, a user can quickly learn about images in the corresponding second media contents through the thumbnails of the respective second media contents, and determine a second media content that the user intends to watch.

Exemplarily, when a quantity of the second media contents included in the first media content is less than or equal to a preset quantity (for example, 9 or 10), the media content identifiers of the respective second media contents can be switched to be displayed as thumbnails corresponding to corresponding second media contents. When the quantity of the second media contents included in the first media content is greater than a preset quantity threshold, a preset continuous quantity of media content identifiers that include media content identifiers of current second media contents displayed in the media content display interface can be switched to be displayed as thumbnails corresponding to corresponding second media contents. For example, all the media content identifiers are switched to thumbnails, and only a preset continuous quantity of thumbnails that include the thumbnails corresponding to the current second media contents displayed in the media content display interface are displayed in the media content display interface. Or, only a preset continuous quantity of media content identifiers that include media content identifiers of current second media contents displayed in the media content display interface are switched to be displayed as thumbnails corresponding to corresponding second media contents, and displaying of other media content identifiers is canceled.

It can be understood that by way of example, each second media content is a picture content. The thumbnails corresponding to the respective media contents may not be displayed in response to the target triggering operation. For example, a media content identifier displayed in a first style can be switched to a second control displayed in a second style. The first style and the second style can both be graphical styles, and they can have different display sizes.

S203. A current position to which the target sliding operation slides is determined in response to a target sliding operation applied in a second preset region, and a second media content corresponding to a target second control displayed at the current position is displayed in the media content display interface, wherein the second preset region is an associated region of the second control.

The second preset region can be understood as a response region of the second control, that is, a hot region of the second control, such as a display region where the second control is located. The second preset region and the first preset region can be the same or different. The target sliding operation can be a sliding operation in a preset direction. For example, when the second control is laterally arranged, the target sliding operation can be a lateral sliding operation. When the second control is vertically arranged, the target sliding operation can be a vertical sliding operation. The current position can be understood as a position to which the target sliding operation slides at current time, that is, a position where a touch point corresponding to the target sliding operation is located. The target second control can be a second control displayed at the current position. The target second control has a different display style from a display style of a further second control in additional to the target second control displayed in the media content display interface, so as to distinguish a second control that is triggered currently.

In this embodiment, in the process that the user performs the target sliding operation, the second media content corresponding to the second control displayed at the position to which the target sliding operation slides can be displayed in the media content display interface, so that the user can preview the second media content and quickly determine whether to switch the display progress of the first media content to the display progress corresponding to the second media content.

Lateral arrangement of the respective second controls is taken as an example. After the second controls are displayed, the user can slide laterally in the second preset region. Correspondingly, an electronic device can periodically determine the current position where the user laterally slides and the target second control displayed at the current position in the lateral sliding process of the user, switch the current second media content displayed in the media content display interface to the second media content corresponding to the target second control, display the target second control in one style, and display a further second control in additional to the target second control displayed in the media content display interface, in another style. Compared with the further second control, the target second control can have a large display size, for example, having a large height and/or width, as shown in FIG. 4 (by way of example, the third second control in FIG. 4 is the target second control).

In one implementation, after the current position to which the target sliding operation slides is determined, the method further includes: The target second control displayed at the current position is updated in response to that the current position is a first set position of the second preset region.

In the above implementation, when the target sliding operation is performed to slide to a certain set position (namely, the first set position) in the second preset region, the second control displayed at the set position can be automatically updated. Therefore, the user can preview different second media contents in the media content display interface without continuing to slide, and can move non-displayed second controls into the second preset region for displaying, so that the user can preview or switch and display the second media contents corresponding to the second controls.

Optionally, after the current position to which the target sliding operation slides is determined, it can be determined whether the current position is the first set position. If the current position is the first set position, the target second control displayed at the current position is updated, and the second media content corresponding to the target second control displayed at the current position is displayed in the media content display interface. If the current position is not the first set position, the target second control displayed at the current position is not updated, and only the second media content corresponding to the target second control displayed at the current position is displayed in the media content display interface. The first set position can be any set position in the second preset region, and can be a boundary position of the second preset region. For example, when the respective second controls are laterally arranged, the first set position can be a left or right boundary position of the second preset region. When the respective second controls are vertically arranged, the first set position can be an upper or lower boundary position of the second preset region.

In this embodiment, an update manner for the target second control displayed at the current position can be flexibly set. Exemplarily, the respective second controls displayed in the second preset region can be subjected to update in batches. For example, n (n is a positive integer) second controls displayed in the second preset region are updated into n other second controls not displayed at the current time. The respective second controls displayed in the second preset region can also be controlled to move in a set direction, so as to move the second controls that are not displayed at the current time into the second preset region for displaying. For example, assuming that the respective second controls are laterally arranged, when the user performs lateral sliding in the second preset region to the left boundary position/right boundary position of the second preset region, the respective second controls displayed in the second preset region can be controlled to synchronously move to the right/left, so as to update the target second control displayed at the left boundary position/right boundary position. In this way, optionally, the target second control displayed at the current position is updated, which includes: Update in batches is performed on the respective second controls displayed in the second preset region; or, the respective second controls displayed in the second preset region are controlled to move in a same direction.

It can be understood that the target sliding operation can be a sliding operation that is performed consecutively with the target triggering operation. For example, when the target triggering operation is a long press operation, the user can directly perform sliding after making a long press, without lifting a finger. Thus, when the execution of the target triggering operation ends, for example, when the user directly lifts the finger without performing sliding after performing the target triggering operation, the second control can be restored to the media content identifier. When a start position of the target sliding operation is the first set position of the second preset region, after the media content identifiers are switched to the second controls, the target second control displayed at the first set position can also be updated. For example, if the user keeps a long press at the first set position, the media content identifiers can be first switched to the second controls, and the target second control displayed at the first set position is then updated until the user slides out of the first set position or the triggering of the long press operation ends.

S204. In response to that the triggering of the target sliding operation ends, the second controls are restored to the media content identifiers, and/or, at least a part of the first media content is displayed at a start point represented by a display progress corresponding to the target sliding operation.

The display progress corresponding to the target sliding operation can be a display progress obtained by adjustment at the end of the triggering of the target sliding operation, such as a display progress, in the first media content, of the second media content corresponding to the second control reached at the end of the triggering of the target sliding operation.

Optionally, when the triggering of the target sliding operation ends, for example, when the touch point corresponding to the target sliding operation disappears, the second controls can be restored to the media content identifiers; and/or, the second media content displayed in the media content display interface at the end of the triggering of the target sliding operation is kept being displayed in the media content display interface, and the second media contents displayed in the media content display interface will be no longer automatically switched, or by taking the second media content displayed in the media content display interface at the end of the triggering of the target sliding operation as a start point, the second media content and the respective second media contents, arranged behind the second media content, in the first media content are continued to be displayed.

In this embodiment, after the media content identifiers are switched to the second controls, the user can preview any second media content included in the first media content through a simple sliding operation. Compared to the method of switching the currently displayed second media content to another second media content adjacent to the currently displayed second media only according to the arrangement sequence of the respective second media contents in the first media content during the sliding operation applied by the user at each time, this method can achieve quick switching of the second media contents, meet different switching needs of the user, and improve the user experience.

In one implementation, the display controlling method according to this embodiment further includes: The second control is restored to the media content identifier in response to a revocation operation applied on the target sliding operation, and at least a part of the first media content is continued to be displayed at a display start point represented by the latest display progress of at least a part of the first media content before receiving the target sliding operation.

The revocation operation can be used for revoking the target sliding operation. Exemplarily, the revocation operation can be a sliding operation having a sliding direction different from the sliding direction of the target sliding operation. For example, when the target sliding operation is a lateral sliding operation, the revocation operation can be a vertical sliding operation.

Optionally, in the process that the user performs the target sliding operation, if the user does not intend to adjust the display progress of the first media content through the target sliding operation, the user can perform the revocation operation, for example, changing lateral sliding to vertical sliding. Correspondingly, when receiving the revocation operation applied on the target sliding operation, the electronic device can restore the second controls displayed in the media content display interface to the media content identifiers, and continue to display the respective second media contents in the first media content at the display start point represented by the latest display progress of the first media content, or keep displaying a second media content corresponding to the display start point.

The display controlling method according to this embodiment can achieve quick switching of the display progress of the first media content, and also achieve preview of the second media contents included in the first media content, thus improving the efficiency of switching the display progress, avoiding such a phenomenon that a sliding operation needs to be repeatedly performed to search for a satisfactory display progress, and improving the user experience.

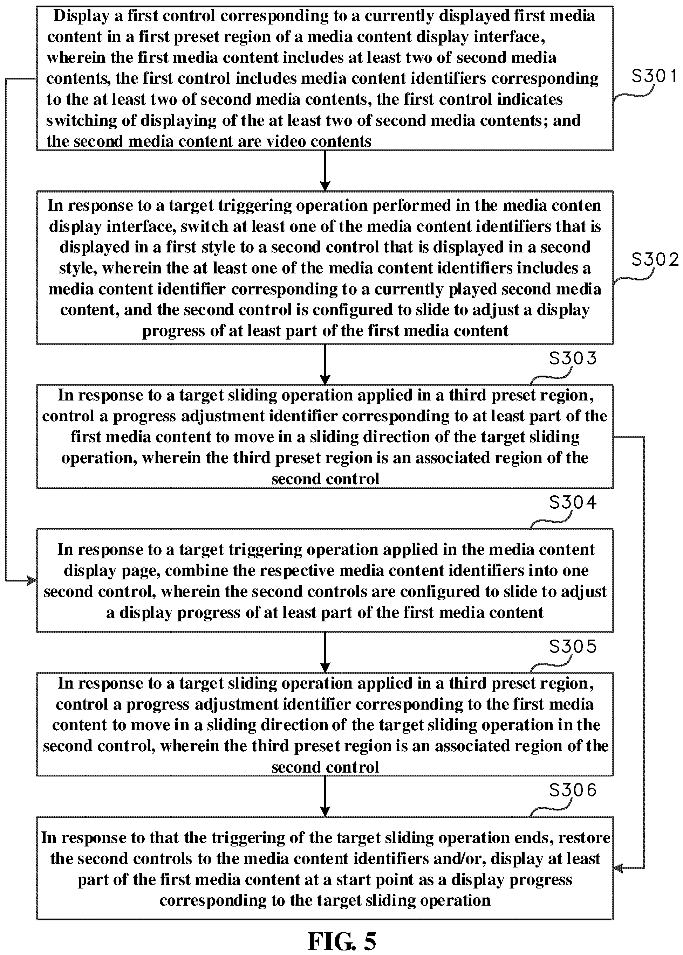

FIG. 5 is a flowchart of another display controlling method according to the embodiments of the present disclosure. The scheme in this embodiment can be combined with one or more optional schemes in the above embodiments. Optionally, the second media contents are videos. At least one of the media content identifiers is switched to a second control, which includes: At least one of the media content identifiers displayed in a first style is switched to a second control displayed in a second style, wherein the at least one of the media content identifiers includes a media content identifier corresponding to a currently played second media content; or, the respective media content identifiers are combined into one second control.

Optionally, after at least one of the media content identifiers displayed in a first style is switched to a second control displayed in a second style, the method further includes: A progress adjustment identifier corresponding to at least a part of the first media content is controlled, in response to a target sliding operation applied in a third preset region, to move in a sliding direction of the target sliding operation, wherein the third preset region is an associated region of the second control.

Optionally, after the respective media content identifiers are combined into one second control, the method further includes: A progress adjustment identifier corresponding to the first media content is controlled, in response to a target sliding operation applied in a third preset region, to move in a sliding direction of the target sliding operation in the second control, wherein the third preset region is an associated region of the second control.

Correspondingly, as shown in FIG. 5, the display controlling method provided in this embodiment can include:
S301. A first control corresponding to a currently displayed first media content is displayed in a first preset region of a media content display interface, and S302 or S304 is executed, wherein the first media content includes at least two of second media contents; the first control includes media content identifiers corresponding to the at least two of second media contents; the first control indicates switching of displaying of the at least two of second media contents; and the second media contents are videos.
S302. At least one of the media content identifiers that is displayed in a first style is switched, in response to a target triggering operation applied in the media content display interface, to a second control that is displayed in a second style, wherein the at least one of the media content identifiers includes a media content identifier corresponding to a currently played second media content, and the second control is configured to slide to adjust a display progress of at least a part of the first media content.

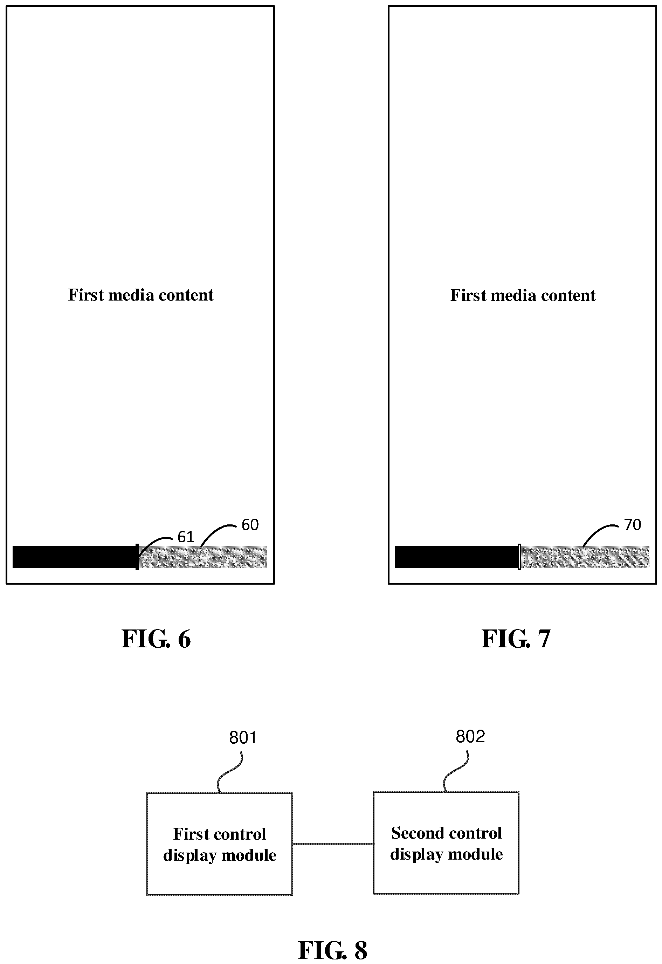

In this embodiment, when the target triggering operation has been received, media content identifiers 20 (as shown in FIG. 2) corresponding to one or more second media contents including the currently played second media content can be respectively switched to second controls 60 corresponding to the corresponding second media contents. For example, the media content identifiers 20 corresponding to the one or more second media contents including the currently displayed second media content are switched from the first style to the second style to obtain the second controls 60 corresponding to the corresponding second media contents, and the second control 60 corresponding to the currently played second media content can be displayed in the media content display interface, as shown in FIG. 6, so as to facilitate a user to adjust a playing progress of the corresponding second media content or switch the currently played second media content through the second control 60.

The first style and the second style can have different display sizes. Therefore, switching a certain media content identifier to a second control can enlarge the display size of the media content identifier. For example, a length of the media content identifier is increased to a preset length, and/or a width of the media content identifier is increased to a preset width. In this way, optionally, at least one of the media content identifiers is switched to a second control, which includes: A display size of the at least one of the media content identifiers is increased.

S303. A progress adjustment identifier corresponding to at least a part of the first media content is controlled, in response to a target sliding operation applied in a third preset region, to move in a sliding direction of the target sliding operation, and S306 is executed, wherein the third preset region is an associated region of the second control.

The third preset region can be understood as a response region of the second control in the media content display interface, and the response region can be the same as or different from the first preset region and a second preset region. For example, a size (such as a height) of the third preset region can be larger than a size of the first preset region and smaller than a size of the second preset region.

Optionally, as shown in FIG. 6, when an electronic device displays the second control 60, the electronic device can display, according to a playing progress of the currently played second media content, a progress adjustment identifier (such as a progress slider 61) in the second control 60 corresponding to the second media content. The progress adjustment identifier indicates a playing progress of at least a part (including the currently played second media content) of the first media content. Thus, a user can perform the target sliding operation if the user intends to adjust the playing progress of the first media content/the second media content. Correspondingly, when the electronic device has received the target sliding operation of the user, the electronic device can control the progress adjustment identifier to move in a sliding direction of the target sliding operation in the second control 60, or control the progress adjustment identifier to move in the sliding direction of the target sliding operation in different second controls 60, so as to adjust the playing progress indicated by the progress adjustment identifier.

In one implementation, a progress adjustment identifier corresponding to at least a part of the first media content is controlled to move in a sliding direction of the target sliding operation, which can include: The progress adjustment identifier is controlled to move in the sliding direction of the target sliding operation in the second control corresponding to the currently played second media content.

In the above implementation, the progress adjustment identifier can only be used for adjusting the playing progress of the currently played second media content. In other words, the progress adjustment identifier can only be moved in the second control corresponding to the currently played second media content, and cannot be moved across the second control.

Optionally, as shown in FIG. 6, the progress adjustment identifier can be displayed in the second control 60 corresponding to the currently played second media content. Thus, when the target sliding operation has been received, the progress adjustment identifier can be controlled to move in the sliding direction of the target sliding operation in the second control 60 corresponding to the currently played second media content, so as to adjust the playing progress of the second media content.

It should be noted that the progress adjustment identifier mentioned above can only be moved in the second control corresponding to the currently played second media content. It can be understood that when the position of the progress adjustment identifier is adjusted on the basis of the target sliding operation, the progress adjustment identifier can only be moved in the second control. It can be understood that when the position of the media content identifier is automatically updated with the playing of the first media content, the progress adjustment identifier can be moved between different media content identifiers or different second controls.

In another implementation, a progress adjustment identifier corresponding to at least a part of the first media content is controlled to move in a sliding direction of the target sliding operation, which includes: The progress adjustment identifier is controlled to move in the sliding direction of the target sliding operation in the second controls corresponding to a plurality of segments of second media contents.

In the above implementation, the progress adjustment identifier can not only be used for adjusting the playing progress of the currently played second media content, but also used for switching the currently played second media content. In other words, the progress adjustment identifier can be moved in second controls corresponding to different second media contents.

Optionally, as shown in FIG. 6, the progress adjustment identifier can be displayed in the second control 60 corresponding to the currently played second media content. Thus, when the target sliding operation has been received, the progress adjustment identifier can be controlled to move in the sliding direction of the target sliding operation in the second controls 60 corresponding to the respective second media contents, so as to switch the currently played second media content or adjust the playing progress of the currently played second media content.

In this embodiment, optionally, the progress adjustment identifier is controlled to move in the sliding direction of the target sliding operation in second controls corresponding to a plurality of segments of second media contents, which includes at least one of the following: The progress adjustment identifier is controlled, in response to that the target sliding operation is performed to slide to a second set position of the third preset region, to continue to move in the sliding direction until the triggering of the target sliding operation ends or the progress adjustment identifier is moved to a third set position of the third preset region; and second controls displayed at the fourth set position are updated in response to that the progress adjustment identifier is slid and moved to a fourth set position.

The second set position, the third set position, and the fourth set position can be the same or different set positions in the third preset region. By way of example, the second set position, the third set position, and the fourth set position are the same set positions in the third preset region. The set position can be a boundary position of the third preset region. For example, when the second controls are laterally arranged, the set position can be a left boundary position or a right boundary position of the third preset region.

Optionally, when the target sliding operation has been received, the progress adjustment identifier can be controlled to move in the sliding direction of the target sliding operation in the respective second controls. Furthermore, in the sliding process of the target sliding operation, it is determined whether the target sliding operation is performed to slide to the second set position of the third preset region. In response to that the target sliding operation is performed to slide to the second set position of the third preset region, the progress adjustment identifier is controlled to continue to move in a moving direction corresponding to the second set position until the progress adjustment identifier is moved to the third set position of the third preset region; and/or, in the moving process of the progress adjustment identifier, it is determined whether the progress adjustment identifier is moved to the fourth set position of the third preset region, and the second controls displayed at the fourth set position are updated in response to that the progress adjustment identifier is moved to the fourth set position of the third preset region, so as to continue to adjust the playing progress indicated by the progress adjustment identifier.

By way of example, the target sliding operation is a right sliding operation, and the second set position, the third set position, and the fourth set position are the boundary position of the third preset region. In a triggering process of the target sliding operation, the progress adjustment identifier can be controlled to move in the sliding direction of the target sliding operation, and it is periodically determined whether the target sliding operation is performed to slide to the right boundary position of the third preset region and whether the progress adjustment identifier is moved to the right boundary position of the third preset region; in response to that the target sliding operation is performed to not slide to the right boundary position of the third preset region and the progress adjustment identifier is not moved to the right boundary position of the third preset region, the progress adjustment identifier is continued to be controlled to move in the sliding direction of the target sliding operation; in response to that the target sliding operation is performed to slide to the right boundary position of the third preset region and the progress adjustment identifier is not moved to the right boundary position of the third preset region, the progress adjustment identifier is controlled to continue to move in its original moving direction, that is, to the right; and in response to that the target sliding operation is performed to slide or not slide to the right boundary position of the third preset region and the progress adjustment identifier is moved to the right boundary position of the third preset region, the second controls displayed at the right boundary position are updated.

In an optional implementation, the position of the progress adjustment identifier can be kept unchanged, and the respective second controls displayed in the third preset region can be controlled to move in the same direction, so as to adjust the position of the progress adjustment identifiers in the second controls and then adjust the playing progress indicated by the progress adjustment identifier. For example, when the progress adjustment identifier is moved to the right boundary position of the third preset region, the second controls in the third preset region are controlled to move to the left; and when the progress adjustment identifier is moved to the left boundary position of the third preset region, the second controls in the third preset region are controlled to move to the right, so as to move non-displayed second controls in the third preset region into the third preset region for displaying. In this way, second controls displayed at the fourth set position are updated, which can include: The respective second controls displayed in the third preset region are controlled to move in the same direction, and the progress adjustment identifier is kept being displayed at the fourth set position.

In another optional implementation, a current second control displayed at the fourth set position can be switched to a second control (namely, the target second control), adjacent to the current second control, in the first control. For example, the second control displayed at the fourth set position can be switched to the second control, adjacent to the second control and located on a left side/right side of the second control, in the first control, and the position of the progress adjustment identifier in the second control is adjusted according to the display progress indicated by the progress adjustment identifier before the update, so as to avoid such a phenomenon that the display progress indicated by the progress adjustment identifier jumps. In this way, second controls displayed at the fourth set position are updated, which can include: The current second control displayed at the fourth set position is switched to the target second control, adjacent to the current second control, in the first control, and a display position of the progress adjustment identifier is adjusted according to a playing progress indicated by the progress adjustment identifier before the switching.

In a further optional implementation, update in batches can be performed on the respective second controls displayed in the third preset region. For example, m (m is a positive integer) second controls that are completely displayed in the third preset region can be switched to other m second controls, continuously arranged with the m second controls and located on a left side/right side of the m second controls. The position of the progress adjustment identifier is adjusted according to the playing progress indicated by the progress adjustment identifier before the update, so as to avoid the phenomenon that the display progress indicated by the progress adjustment identifier jumps. In this way, second controls displayed at the fourth set position are updated, which can include: update in batches is performed on the respective second controls displayed in the third preset region, and a display position of the progress adjustment identifier is adjusted according to the playing progress indicated by the progress adjustment identifier before the update in batches.

S304. The respective media content identifiers are combined into one second control in response to a target triggering operation applied in the media content display interface, wherein the second controls are configured to slide to adjust a display progress of at least a part of the first media content.

In this embodiment, when the target triggering operation has been received, the respective media content identifiers can also be combined into one second control corresponding to the first media content. For example, the respective media content identifiers displayed in the graphical form are combined into a large graphic, and sizes of the plurality of media content identifiers can be increased before the combination or a size of the graphic obtained by the combination can be increased after the combination, so as to obtain a second control corresponding to the first media content.

Exemplarily, as shown in FIG. 2, before the combination, the media content identifiers 20 corresponding to the respective second media contents can be displayed in the form of a line segment. Therefore, when the target triggering operation has been received, a plurality of media content identifiers (namely, a plurality of line segments) can be combined into a long line segment in response to the target triggering operation, and a width of the line segment obtained by combination can be increased to a set width to obtain a progress bar corresponding to the first media content, as a second control 70 corresponding to the first media content, as shown in FIG. 7.

S305. A progress adjustment identifier corresponding to the first media content is controlled, in response to a target sliding operation applied in a third preset region, to move in a sliding direction of the target sliding operation in the second control, wherein the third preset region is an associated region of the second control.

Optionally, after the second control corresponding to the first media content is displayed, a user can adjust the position of the progress adjustment identifier of the first media content in the second control by performing the target sliding operation. Correspondingly, when the electronic device has received the target sliding operation of the user, the electronic device can control the progress adjustment identifier in the second control to move in the second control. For example, the progress adjustment identifier is controlled to move in the second control synchronously with the sliding direction of the target sliding operation, so as to adjust a playing time node indicated by the progress adjustment identifier in the second control, that is, adjusting the playing progress indicated by the progress adjustment identifier in the second control.

S306. In response to that the triggering of the target sliding operation ends, the second controls are restored to the media content identifiers, and/or, at least a part of the first media content is displayed at a start point represented by a display progress corresponding to the target sliding operation.

Exemplarily, when the triggering of the target sliding operation ends, for example, when the touch point corresponding to the target sliding operation disappears, the second controls can be restored to the media content identifiers; and/or, the second media content corresponding to the playing progress indicated by the progress adjustment identifier of the first media content at the end of the triggering of the target sliding operation is played or cyclically played in the media content display interface, and will be no longer switched to another second media content in the first media content; or, a second media content corresponding to a playing start point and respective second media contents, located behind the second media content, in the first media content according to the arrangement sequence are continued to be displayed, and the playing start point is represented by the playing progress indicated by the progress adjustment identifier of the first media content at the end of the triggering of the target sliding operation.

According to the display controlling method provided in this embodiment, the progress adjustment identifiers corresponding to the respective second media contents are switched to the second controls corresponding to the second media contents, or the progress adjustment identifiers corresponding to the respective second media contents are combined into one second control corresponding to the first media content, which can quickly adjust the display progress of the first media content in multiple ways to meet a progress adjustment need of the user and improve the user experience.

FIG. 8 is a structural block diagram of a display controlling apparatus according to the embodiments of the present disclosure. The apparatus can be implemented by software and/or hardware and can be configured in an electronic device, exemplarily, a mobile phone or a tablet. Displayed media contents can be controlled by performing a display controlling method. As shown in FIG. 8, the display controlling apparatus provided in this embodiment can include a first control display module 801 and a second control display module 802.

The first control display module 801 is configured to display a first control corresponding to a currently displayed first media content in a first preset region of a media content display interface, wherein the first media content includes at least two of second media contents; the first control includes media content identifiers corresponding to the at least two of second media contents; the first control indicates switching of displaying of the at least two of second media contents; and

the second control display module 802 indicates switching of at least one of the media content identifiers to a second control in response to a target triggering operation applied in the media content display interface, wherein the second control is configured to slide to adjust a display progress of at least a part of the first media content.

According to the display controlling apparatus provided in this embodiment, a first control corresponding to a currently displayed first media content is displayed in a first preset region of a media content display interface through the first control display module, wherein the first media content includes at least two of second media contents; the first control includes media content identifiers corresponding to the at least two of second media contents; the first control indicates switching of displaying of the at least two of second media contents; and at least one of the media content identifiers is switched to a second control through the second control display module in response to a target triggering operation applied on the media content broadcast interface, wherein the second control is configured to slide to adjust a display progress of at least a part of the first media content. In this embodiment, by the adoption of the above method, the media content identifiers in the first control are switched to the second controls, so that the display progress of the first media content is adjusted through the second controls, which can simplify the operation of adjusting the display progress of the first media content and improving the efficiency of adjusting the display progress of the first media content.

In the above scheme, the second media contents can be, for example, picture contents. The second control display module 802 can be configured to switch at least one of the media content identifiers to a second control in the following way: switching and displaying at least one of the media content identifiers as a thumbnail of the corresponding second media content, wherein the media content identifier is a graphical identifier.

Optionally, the display controlling apparatus provided in this embodiment can further include: a first content display module, configured to: determine, in response to a target sliding operation applied in a second preset region, a current position to which the target sliding operation slides, and display, in the media content display interface, a second media content corresponding to a target second control displayed at the current position, wherein the second preset region is an associated region of the second control.

In the above scheme, the target second control can have a different display style from a display style of a further second control in additional to the target second control in the media content display interface.

Optionally, the display controlling apparatus provided in this embodiment can further include: a control update module, configured to update, in response to that the current position is a first set position of the second preset region, the target second control displayed at the current position.

In this way, the control update module can be configured to update the target second control displayed at the current position in the following way: updating on second controls displayed in the second preset region in batches; or, controlling the second controls displayed in the second preset region to move in a same direction.

In the above scheme, the second media contents can be videos. The second control display module 802 can include: a control switching unit, configured to switch at least one of the media content identifiers displayed in a first style to a second control displayed in a second style, wherein the at least one of the media content identifiers includes a media content identifier corresponding to a currently played second media content; or, combine the respective media content identifiers into one second control.

In the above scheme, the second control display module 802 can be configured to switch at least one of the media content identifiers to a second control in the following way: increasing a display size of the at least one of the media content identifiers.

Optionally, the display controlling apparatus provided in this embodiment can further include: a mobile controlling module, configured to: control, in response to a target sliding operation applied in a third preset region, a progress adjustment identifier corresponding to at least a part of the first media content to move in a sliding direction of the target sliding operation, wherein the third preset region is an associated region of the second control.

In the above scheme, the first controlling module can include: a first mobile controlling unit, configured to control the progress adjustment identifier to move in the sliding direction of the target sliding operation in the second control corresponding to the currently played second media content, or, a second mobile controlling unit, configured to control the progress adjustment identifier to move in the sliding direction of the target sliding operation in second controls corresponding to a plurality of segments of second media contents.

In the above scheme, the second mobile controlling unit can include at least one of the following: a mobile controlling subunit, configured to control, in response to that the target sliding operation is performed to slide to a second set position of the third preset region, the progress adjustment identifier to continue to move in the sliding direction until the triggering of the target sliding operation ends or the progress adjustment identifier is moved to a third set position of the third preset region; and a control update subunit, configured to update, in response to that the progress adjustment identifier is slid and moved to a fourth set position, second controls displayed at the fourth set position.

In the above scheme, the control update subunit can be configured to update second controls displayed at the fourth set position in the following way: controlling the second controls displayed in the third preset region to move in the same direction, and keeping displaying the progress adjustment identifier at the fourth set position; or, switching a current second control displayed at the fourth set position to a target second control, adjacent to the current second control, in the first control, and adjusting a display position of the progress adjustment identifier according to a playing progress indicated by the progress adjustment identifier before the switching; or, updating on the respective second controls displayed in the third preset region in batches, and adjusting a display position of the progress adjustment identifier according to the playing progress indicated by the progress adjustment identifier before the update in batches.

Optionally, the display controlling apparatus provided in this embodiment can further include: a second controlling module, configured to control, in response to a target sliding operation applied in a third preset region, a progress adjustment identifier corresponding to the first media content to move in a sliding direction of the target sliding operation in the second control, wherein the third preset region is an associated region of the second control.

Optionally, the display controlling apparatus provided in this embodiment can further include: a restoration module, configured to restore the second control to the media content identifier in response to that the triggering of the target sliding operation ends.

Optionally, the display controlling apparatus provided in this embodiment can further include: a second content display module, configured to display, in response to that the triggering of the target sliding operation ends, at least a part of the first media content at a start point represented by a display progress corresponding to the target sliding operation.

Optionally, the display controlling apparatus provided in this embodiment can further include: a revocation module, configured to: restore the second control to the media content identifier in response to a revocation operation applied on the target sliding operation, and continue to display at least a part of the first media content at a display start point represented by the latest display progress of at least a part of the first media content before receiving the target sliding operation.

In the above scheme, the target triggering operation is performed in the first preset region.

The display controlling apparatus provided by the embodiments of the present disclosure can perform the display controlling method provided by any embodiment of the present disclosure, and has the corresponding functional modules and beneficial effects for performing the display controlling method. For technical details not described in this embodiment, refer to the display controlling method provided in any embodiment of the present disclosure.

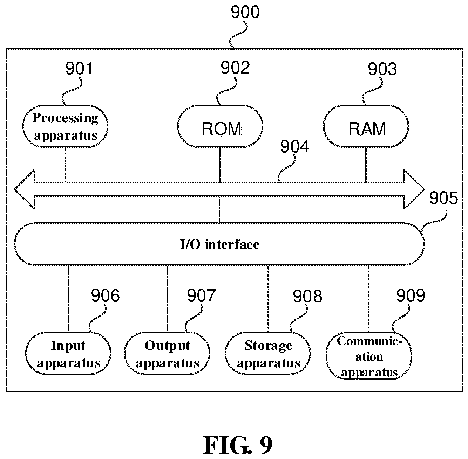

Reference is now made to FIG. 9 below, which illustrates a schematic structural diagram of an electronic device (namely, a terminal device) 900 suitable for implementing an embodiment of the present disclosure. The terminal device in the embodiments of the present disclosure may include a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 9 is only an example.

As shown in FIG. 9, the electronic device 900 may include a processing apparatus (such as a central processing unit and graphics processor) 901 that can perform various appropriate actions and processing according to programs stored in a Read-Only Memory (ROM) 902 or loaded from a storage apparatus 908 to a Random Access Memory (RAM) 903. Various programs and data required for operations of the electronic device 900 may also be stored in the RAM 903. The processing apparatus 901, the ROM 902, and the RAM 903 are connected to each other through a bus 904. An Input/Output (I/O) interface 905 is also connected to a bus 904.

Usually, following apparatuses can be connected to the I/O interface 905: an input apparatus 906 including a touch screen, a touchpad, a keyboard, a mouse, a camera, a microphone, an accelerometer, a gyroscope, and the like; an output apparatus 907 including a Liquid Crystal Display (LCD), a speaker, a vibrator, and the like; a storage apparatus 908 including a magnetic tape, a hard disk drive, and the like; and a communication apparatus 909. The communication apparatus 909 can allow the electronic device 900 to wirelessly or wiredly communicate with other devices to exchange data. Although FIG. 9 shows the electronic device 900 with multiple apparatuses, it should be understood that the electronic device 900 is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product. The computer program product includes a computer program carried on a non-transitory computer-readable medium, and the computer program includes program codes used for performing the methods shown in the flowcharts. In such an embodiment, the computer program may be downloaded and installed from a network through the communication apparatus 909, or installed from the storage apparatus 908, or installed from the ROM 902. When the computer program is executed by the processing apparatus 901, the above-mentioned functions in the methods of the embodiments of the present disclosure are executed.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, electric, magnetic, optical, electromagnetic, infrared, or semiconductor systems, apparatuses, or devices, or any combination of the above. The computer-readable storage medium may include: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including: a wire, an optical cable, a Radio Frequency (RF), and the like, or any suitable combination of the above.

In some implementations, clients and servers can communicate using any currently known or future developed network protocol such as a Hyper Text Transfer Protocol (HTTP), and can intercommunicate and be interconnected with digital data in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. When the above one or more programs are executed by the electronic device, the electronic device is caused to: display a first control corresponding to a currently displayed first media content in a first preset region of a media content display interface, wherein the first media content includes at least two of second media contents; the first control includes media content identifiers corresponding to the at least two of second media contents; the first control indicates switching of displaying of the at least two of second media contents; and switch at least one of the media content identifiers to a second control in response to a target triggering operation applied in the media content display interface, wherein the second control is configured to slide to adjust a display progress of at least a part of the first media content.

Computer program codes for performing the operations of the present disclosure may be written in one or more programming languages or a combination thereof. The above programming languages include an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case where a remote computer is involved, the remote computer can be connected to a user computer through any kind of networks, including a LAN or a WAN, or can be connected to an external computer (for example, through an Internet using an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that, Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware.

The functions described herein above may be performed, at least in part, by one or a plurality of hardware logic components. For example, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include an electronic, magnetic, optical, electromagnetic, infrared, or semiconductor system, apparatus, or device, or any suitable combination of the above content. The machine-readable storage medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

According to one or more embodiments of the present disclosure, Example 1 provides a display controlling method, including:
displaying a first control corresponding to a currently displayed first media content in a first preset region of a media content display interface, wherein the first media content includes at least two of second media contents; the first control includes media content identifiers corresponding to the at least two of second media contents; the first control indicates switching of displaying of the at least two of second media contents; and
switching at least one of the media content identifiers to a second control in response to a target triggering operation applied in the media content display interface, wherein the second control is configured to slide to adjust a display progress of at least a part of the first media content.

According to one or more embodiments of the present disclosure, in Example 2, in the method according to Example 1, the second media content is a picture content or a video content, and the switching at least one of the media content identifiers to a second control includes:
switching and displaying at least one of the media content identifiers as a thumbnail of the corresponding second media content, wherein the media content identifier is a graphical identifier.

According to one or more embodiments of the present disclosure, in Example 3, in the method according to Example 1, after the switching at least one of the media content identifiers to a second control, the method further includes:
determining, in response to a target sliding operation applied in a second preset region, a current position to which the target sliding operation slides, and displaying, in the media content display interface, a second media content corresponding to a target second control displayed at the current position, wherein the second preset region is an associated region of the second control.

According to one or more embodiments of the present disclosure, in Example 4, in the method according to Example 3, the target second control has a different display style from a display style of a further second control in additional to the target second control displayed in the media content display interface.

According to one or more embodiments of the present disclosure, in Example 5, in the method according to Example 3, after the determining a current position to which the target sliding operation slides, the method further includes:
updating, in response to that the current position is a first set position of the second preset region, the target second control displayed at the current position.

According to one or more embodiments of the present disclosure, in Example 6, in the method according to Example 5, the updating the target second control displayed at the current position includes:
updating on second controls displayed in the second preset region in batches; or,
controlling the second controls displayed in the second preset region to move in a same direction.

According to one or more embodiments of the present disclosure, in Example 7, in the method according to Example 1, the second media content is a video content, and the switching at least one of the media content identifiers to a second control includes:
switching at least one of the media content identifiers displayed in a first style to a second control displayed in a second style, wherein the at least one of the media content identifiers includes a media content identifier corresponding to a currently played second media content; or,
combining the media content identifiers into one second control.

According to one or more embodiments of the present disclosure, in Example 8, in the method according to Example 7, the switching at least one of the media content identifiers to a second control includes:
increasing a display size of the at least one of the media content identifiers.

According to one or more embodiments of the present disclosure, in Example 9, in the method according to Example 7, after the switching at least one of the media content identifiers displayed in a first style to a second control displayed in a second style, the method further includes:
controlling, in response to a target sliding operation applied in a third preset region, a progress adjustment identifier corresponding to at least a part of the first media content to move in a sliding direction of the target sliding operation, wherein the third preset region is an associated region of the second control.

According to one or more embodiments of the present disclosure, in Example 10, in the method according to Example 9, the controlling a progress adjustment identifier corresponding to at least a part of the first media content to move in a sliding direction of the target sliding operation includes:
controlling the progress adjustment identifier to move in the sliding direction of the target sliding operation in the second control corresponding to the currently played second media content, or,
controlling the progress adjustment identifier to move in the sliding direction of the target sliding operation in second controls corresponding to a plurality of segments of second media contents.

According to one or more embodiments of the present disclosure, in Example 11, in the method according to Example 10, the controlling the progress adjustment identifier to move in the sliding direction of the target sliding operation in second controls corresponding to a plurality of segments of second media contents includes at least one of the following:
controlling, in response to that the target sliding operation is performed to slide to a second set position of the third preset region, the progress adjustment identifier to continue to move in the sliding direction until the triggering of the target sliding operation ends or the progress adjustment identifier is moved to a third set position of the third preset region; and
updating, in response to that the progress adjustment identifier is slid and moved to a fourth set position, second controls displayed at the fourth set position.

According to one or more embodiments of the present disclosure, in Example 12, in the method according to Example 11, the updating second controls displayed at the fourth set position includes:
controlling the second controls displayed in the third preset region to move in the same direction, and keeping displaying the progress adjustment identifier at the fourth set position; or,
switching a current second control displayed at the fourth set position to a target second control, adjacent to the current second control, in the first control, and adjusting a display position of the progress adjustment identifier according to a playing progress indicated by the progress adjustment identifier before the switching; or,
updating on the second controls displayed in the third preset region in batches, and adjusting a display position of the progress adjustment identifier according to the playing progress indicated by the progress adjustment identifier before the update in batches.

According to one or more embodiments of the present disclosure, in Example 13, in the method according to Example 7, after the combining the media content identifiers into one second control, the method further includes:
controlling, in response to a target sliding operation applied in a third preset region, a progress adjustment identifier corresponding to the first media content to move in a sliding direction of the target sliding operation in the second control, wherein the third preset region is an associated region of the second control.

According to one or more embodiments of the present disclosure, in Example 14, in the method according to any one of Examples 3 to 6 and Examples 9 to 13, the method further includes:
restoring the second control to the media content identifier in response to that the triggering of the target sliding operation ends.

According to one or more embodiments of the present disclosure, in Example 15, in the method according to any one of Examples 3 to 6 and Examples 9 to 13, the method further includes:
displaying, in response to that the triggering of the target sliding operation ends, at least a part of the first media content at a start point represented by a display progress corresponding to the target sliding operation.

According to one or more embodiments of the present disclosure, in Example 16, in the method according to any one of Examples 3 to 6 and Examples 9 to 13, the method further includes:
restoring the second control to the media content identifier in response to a revocation operation applied on the target sliding operation, and continuing to display at least a part of the first media content at a display start point represented by the latest display progress of at least a part of the first media content before receiving the target sliding operation.

According to one or more embodiments of the present disclosure, in Example 17, in the method according to any one of Examples 1 to 13, the target triggering operation is performed in the first preset region.

According to one or more embodiments of the present disclosure, Example 18 provides a display control apparatus, including:
a first control display module, configured to display a first control corresponding to a currently displayed first media content in a first preset region of a media content display interface, wherein the first media content includes at least two of second media contents; the first control includes media content identifiers corresponding to the at least two of second media contents; the first control indicates switching of displaying of the at least two of second media contents; and
a second control display module, configured to switch at least one of the media content identifiers to a second control in response to a target triggering operation applied in the media content display interface, wherein the second control is configured to slide to adjust a display progress of at least a part of the first media content.

According to one or more embodiments of the present disclosure, Example 19 provides an electronic device, including:
one or more processors;
a memory, configured to store one or more programs.

The one or more programs, when executed by the one or more processors, cause the one or more processors to implement the display control method according to any one of Examples 1 to 17.

According to one or more embodiments of the present disclosure, Example 20 provides a computer-readable storage medium, storing a computer program. The program, when executed by a processor, implements the display control method according to any one of Examples 1 to 17.

According to one or more embodiments of the present disclosure, Example 21 provides a computer program product. The computer program product, when executed by a computer, causes the computer to implement the display control method according to any one of Examples 1 to 17.

In addition, although various operations are depicted in a specific order, this should not be understood as requiring these operations to be executed in the specific order shown or in a sequential order. In certain environments, multitasking and parallel processing may be advantageous. Some features described in the context of individual embodiments can also be combined and implemented in a single embodiment. On the contrary, various features that are described in the context of the single embodiment may also be implemented in a plurality of embodiments separately or in any suitable sub-combinations.

## Claims

1. A display controlling method, comprising:
displaying a first control corresponding to a currently displayed first media content in a first preset region of a media content display interface, wherein the first media content comprises at least two of second media contents; the first control comprises media content identifiers corresponding to the at least two of second media contents; the first control indicates switching of the displaying of the at least two of second media contents;
switching at least one of the media content identifiers to a second control in response to a target triggering operation applied in the media content display interface, wherein the second control is configured to slide to adjust a display progress of at least a part of the first media content.

2. The method according to claim 1, wherein the second media content comprises a picture or video content,
switching at least one of the media content identifiers to a second control comprises:
switching at least one of the media content identifiers to be displayed as a thumbnail of the corresponding second media content, wherein the media content identifier is a graphical identifier.

3. The method according to claim 1, wherein after the switching at least one of the media content identifiers to a second control, the method further comprises:
in response to a target sliding operation applied in a second preset region, determining a current position to which the target sliding operation slides, and displaying, in the media content display interface, a second media content corresponding to a target second control displayed at the current position, wherein the second preset region is an associated region of the second control.

4. The method according to claim 3, wherein the target second control has a different display style from a display style of a further second control in additional to the target second control displayed in the media content display interface.

5. The method according to claim 3, wherein after determining a current position to which the target sliding operation slides, the method further comprises:
in response to that the current position is a first set position of the second preset region, updating a target second control displayed at the current position.

6. The method according to claim 5, wherein updating a target second control displayed at the current position comprises:
updating second controls displayed in the second preset region in batches; or,
controlling the second controls displayed in the second preset region to move in a same direction.

7. The method according to claim 1, wherein the second media content is a video content, and switching at least one of the media content identifiers to a second control comprises:
switching at least one of the media content identifiers displayed in a first style to a second control displayed in a second style, wherein the at least one of the media content identifiers comprises a media content identifier corresponding to a currently played second media content; or,
combining the media content identifiers into one second control.

8. The method according to claim 7, wherein switching at least one of the media content identifiers to a second control comprises:
increasing a display size of the at least one of the media content identifiers.

9. The method according to claim 7, wherein after the switching at least one of the media content identifiers displayed in a first style to a second control displayed in a second style, the method further comprises:
in response to a target sliding operation applied in a third preset region, controlling a progress adjustment identifier corresponding to at least a part of the first media content to move in a sliding direction of the target sliding operation, wherein the third preset region is an associated region of the second control.

10. The method according to claim 9, wherein controlling a progress adjustment identifier corresponding to at least a part of the first media content to move in a sliding direction of the target sliding operation comprises:
controlling the progress adjustment identifier to move in the sliding direction of the target sliding operation in the second control corresponding to the currently played second media content, or,
controlling the progress adjustment identifier to move in the sliding direction of the target sliding operation in second controls corresponding to a plurality of second media contents.

11. The method according to claim 10, wherein the controlling the progress adjustment identifier to move in the sliding direction of the target sliding operation in second controls corresponding to a plurality of second media contents comprises at least one of the following:
in response to that the target sliding operation slides to a second set position of the third preset region, controlling the progress adjustment identifier to proceed to move in the sliding direction until the triggering of the target sliding operation ends or the progress adjustment identifier moves to a third set position of the third preset region;
in response to that the progress adjustment identifier is slid and moved to a fourth set position, updating second controls displayed at the fourth set position.

12. The method according to claim 11, wherein the updating second controls displayed at the fourth set position comprises:
controlling the second controls displayed in the third preset region to move in the same direction, and keeping displaying the progress adjustment identifier at the fourth set position; or,
switching a current second control displayed at the fourth set position to a target second control, in the first control adjacent to the current second control, and adjusting a display position of the progress adjustment identifier according to a playing progress indicated by the progress adjustment identifier before the switching; or,
updating on the second controls displayed in the third preset region in batches, and adjusting a display position of the progress adjustment identifier according to the playing progress indicated by the progress adjustment identifier before the updating in batches.

13. The method according to claim 7, wherein after the combining the media content identifiers into one second control, the method further comprises:
in response to a target sliding operation applied in a third preset region, controlling a progress adjustment identifier corresponding to the first media content to move in a sliding direction of the target sliding operation in the second control, wherein the third preset region is an associated region of the second control.

14. The method according to any one of claims 3 to 6 and 9 to 13, further comprising:
restoring the second control to the media content identifier in response to that the triggering of the target sliding operation ends.

15. The method according to any one of claims 3 to 6 and 9 to 13, further comprising:
in response to that the triggering of the target sliding operation ends, displaying at least a part of the first media content at a start point as a display progress corresponding to the target sliding operation.

16. The method according to any one of claims 3 to 6 and 9 to 13, further comprising:
in response to a revocation operation on the target sliding operation, restoring the second control to the media content identifier and continuing to display at least a part of the first media content at a display start point of the latest display progress of at least a part of the first media content before receiving the target sliding operation.

17. The method according to any one of claims 1 to 13, wherein the target triggering operation is applied in the first preset region.

18. A display control apparatus, comprising:
a first control display module, configured to display a first control corresponding to a currently displayed first media content in a first preset region of a media content display interface, wherein the first media content comprises at least two of second media contents; the first control comprises media content identifiers corresponding to the at least two of second media contents; the first control indicates switching of the displaying of the at least two of second media contents; and
a second control display module, configured to switch at least one of the media content identifiers to a second control in response to a target triggering operation applied in the media content display interface, wherein the second control is configured to slide to adjust a display progress of at least a part of the first media content.

19. An electronic device, comprising:
at least one processor; and
a memory, which is in communication connection with the at least one processor,
wherein the memory stores a computer program executed by the at least one processor, and the computer program, executed by the at least one processor, causes the at least one processor to implement the display control method according to any one of claims 1 to 17.

20. A computer-readable storage medium, wherein the computer-readable storage medium stores computer instructions; and the computer instructions are used for implementing, when executed by a processor, the display control method according to any one of claims 1 to 17.

21. A computer program product, wherein the computer program product comprises a computer program, and the computer program, when executed on a processor, implements the display control method according to any one of claims 1 to 17.
